# EUROPEAN PATENT SPECIFICATION

(11) **EP 2 961 925 B1**
(45) Date of publication and mention of the grant of the patent: **01.05.2019**
(21) Application number: 14756385.2
(22) Date of filing: 28.02.2014
(51) Int. Cl.: E21B 47/09, E21B 47/04

(54) **RANGE POSITIONING TOOL FOR USE WITHIN A CASING OR LINER STRING**
BEREICHSPOSITIONIERUNGSWERKZEUG ZUR VERWENDUNG IN EINEM GEHÄUSE ODER EINEM FUTTERSTRANG
OUTIL DE TÉLÉMÉTRIE DESTINÉ À ÊTRE UTILISÉ AU SEIN D'UNE COLONNE DE TUBAGE OU CRÉPINE

(30) Priority: 01.03.2013 US 201361771413 P
(43) Date of publication of application: 06.01.2016
(73) Proprietor: Xact Downhole Telemetry, Inc., Calgary, Alberta T2E 6Y4 (CA)
(72) Inventor: CAMWELL, Paul, Calgary, Alberta T2X 1M1 (CA); REEVES, Michael, Houston, Texas 77007 (US)
(74) Representative: Brown, Alexander Edward
(86) International application number: PCT/CA2014/050154
(87) International publication number: WO 2014/131132

(56) References cited:
- EP-A2- 0 647 767
- EP-A2- 0 647 767
- WO-A1-92/14027
- WO-A2-2013/109539
- CA-A1- 2 824 764
- US-A- 4 690 218
- US-A- 5 285 065
- US-A- 5 285 065
- US-A- 5 705 812
- US-A- 5 996 711
- US-A- 6 151 961
- US-A1- 2003 188 867
- US-A1- 2004 238 167
- US-A1- 2005 050 726
- US-A1- 2009 120 637
- US-B1- 6 333 699
- US-B1- 7 475 486
- US-B2- 7 474 221

## Description

### TECHNICAL FIELD

The present disclosure is directed at a range positioning tool for use within a casing or liner string, such as a casing string of a production wellbore.

### BACKGROUND

After an oil or gas well has been drilled, activities known as 'completion operations' are undertaken to create a flow path for hydrocarbons to reach surface. During completion operations it is common to insert and cement into place a string of production casing (or a production liner). This string of tubular elements seals off the drilled rock formations from the wellbore. A perforating gun is then conveyed into the well, typically via wireline, coiled tubing or drill pipe, and explosive charges within the gun are fired, intentionally creating holes (or perforations) that penetrate through the production casing, the cement behind it and some distance into the rock formations. These perforations may be created at one or more locations in the wellbore and are typically positioned to penetrate into rock formations that are believed to contain hydrocarbons.

With perforations in place it is sometimes necessary to mechanically separate the different perforation groupings (or 'production zones') to allow selective production of hydrocarbons and to prevent fluids or gases from one zone entering another. Additionally, it may be necessary to enhance the productivity of hydrocarbon bearing zones by various methods. Further, it may be necessary to protect the wellbore and surface production facilities from the impact of abrasive solids that may be carried by hydrocarbons as they flow from the rock into the wellbore.

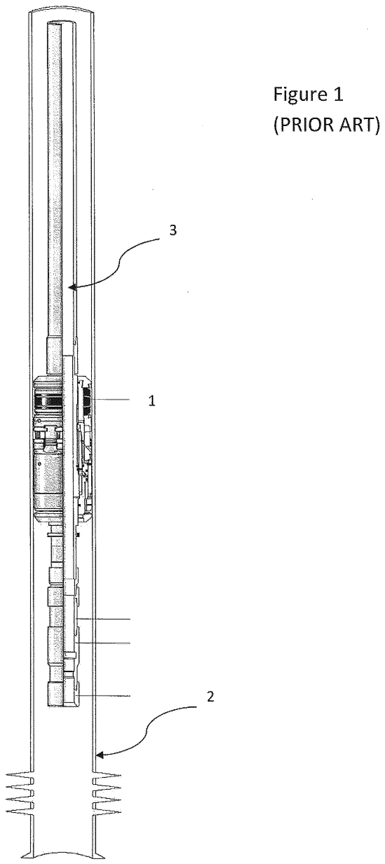

To achieve one or more of these objectives it is common to deploy mechanical devices such as 'packers'. Referring to Figure 1 (PRIOR ART) a packer 1 is a component that can be conveyed into a wellbore 2 (typically at the bottom of a drill pipe string 3) and activated via the introduction of an activation device (typically a metal ball) which travels through the inside of the drill pipe string until it abuts a reduced diameter shoulder at the upper end of a sliding sleeve within the packer (or within a packer setting tool immediately above the packer). Fluid pressure behind the activation ball is then increased, forcing the ball downwards and moving the sliding sleeve which, in turn, triggers anchoring elements within the packer to protrude and firmly grip the inside of the production casing. The common use of an activation device in this process demands that no internal restriction exist within the drill pipe string above the packer which would prevent the passage of the activation device.

Once a packer is set, it is typically intended to remain stationary and in place throughout the completion process and during the lifetime of hydrocarbon production from the wellbore. Most packers cannot easily be retrieved (or 'unset') and therefore accurately positioning a packer at its intended destination is extremely important. More than one packer may be deployed into a single wellbore and other completion/production elements may be suspended below a packer.

Additional completion operations can include the pumping of fluids at high pressure into the perforations, intentionally cracking the rock formation (known as 'fracturing' or 'frac packing'). Other common completion operations include 'open-hole gravel packing' where solid particles are packed into the annular space between the rock and a string of mesh screens suspended below a packer. Most completion operations involve running into the wellbore various downhole tools used to direct fluid and particulate material into the correct locations (generically referred to as 'completion tools') . These completion tools are typically conveyed into the wellbore at the lower end of a string of drill pipe (commonly referred to as a 'work string') and are retrieved to surface at the conclusion of completion activities. It is common for the work string and completion tools to penetrate through the internal diameter of one or more previously installed packers during completion operations.

In wellbores having multiple intended production zones, these completion operations must be conducted on each production zone separately. This requires the completion tools to be moved from one location to another within the wellbore via movement of the work string from surface. In each case, the correct position of the completion tools with respect to one or more packers and/or one or more intended production zones is critical to ultimately achieving optimal lifetime hydrocarbon flow from the well. Required positional accuracy of the completion tools to their intended destination during these activities can range from several feet down to several inches.

It is evident that the inaccurate placement of a packer or a completion tool relative to their intended downhole locations may result in damage to the well or the hydrocarbon bearing rocks and could result in a section of the well having to be abandoned and/or re-drilled. Present approaches to locating packers and completion tools in their intended downhole locations typically involve estimation, experience and the utilization of rudimentary downhole mechanical components which are intended to cause surface load change indications. A challenge to performing this task is that the forward motion of the attached tool or packer is typically estimated by a measured length of pipe below the rig, and the weight of the supported drillstring is typically measured by a surface tool such as a 'hook load indicator'. In vertical wells, measured pipe length and hook load are reasonably accurate indicators. However, these indicators tend to be less reliable when a wellbore is significantly deviated, contains significant horizontal sections or is overly deep. In these situations the movement of a drill pipe string through such deviations or horizontal sections of the wellbore is frequently subject to significant friction, preventing smooth weight transfer from surface. Attempting to force the desired downhole movement without the ability to measure and see the loads being created could lead to tubular buckling, or perhaps mechanical damage to components of the drill pipe string including the packer or completion tools.

Further, pipe length change when the drill pipe is downhole can make it difficult to predict the length of the drill pipe string and the position of the attached tool or packer. Long, deviated or horizontal wells in particular are susceptible to pipe stretch and compression, with compression particularly likely if the drill pipe in the wellbore encounters significant amounts of friction. Further, certain tool activations can also contribute to pipe length change. For instance when a certain activation requires the conveying drill pipe to be pressurized, the pressure can expand the original diameter of the drill pipe and reduce its original length; also drilling fluid pumped through the drill pipe can be much colder than the drill pipe, thereby causing the drill pipe to contract. The net effect has been known to be severe enough that the conveying drill pipe string will reduce length by 6 to 10 feet (about 1.83 to 3.05 metres), thus pulling the packer / completion tool away from its intended destination. If this issue is not corrected, activation of the packer or completion tool could produce deleterious effects thereby causing this phase of operation to be aborted, at great cost.

Conventional means to determine tool and/or packer position within production casing are generally not sufficiently accurate. For instance, it is known to magnetize joints of production casing and use a magnetic sensor (such as a fluxgate magnetometer) lowered down through the production wellbore to count each magnetized joint and convey this information to surface via a telemetry device. However, it can be a challenge to accurately detect several hundred magnetized joints, which may not always be properly magnetized; this can affect the accuracy of the count. Even if the count was accurately made, such conventional systems are only accurate to the distance between each casing joint in the production wellbore, which is typically about 40 feet long (about 12.19 metres long). Such poor resolution will not be particularly helpful when it is desired to accurately position the completion tool and/or packer, which preferably requires precision to about 6 inches (about 0.15 metres).

US 6,333,699 describes a method and apparatus for determining position in a pipe for the determination of location and associated characteristics of each pipe joint of a well, cross country pipeline or other fluid transmission line.

EP 0,647,767 describes a method for positioning a tubing-conveyed well bore apparatus in a well bore. A retrievable MWD tool having a radiation detector is positioned in the lower portion of a tubing string carrying a tubing-conveyed perforator carrying shaped explosive charges.

US 6,151,961 describes a tool for initiating a downhole function in a subsurface well, such as a cased well. The tool has memory adapted to store a well-specific reference pattern of one or more downhole well characteristics as a function of position along the well, one or more sensors responsive to the downhole well characteristics, and a clocked processor.

US 2004/238167 describes a method and apparatus for perforating a casing in a wellbore.

US 5,285,065 describes a natural gamma tag marking materials for sub or permanent markers used in gamma logging operations, such natural gamma materials having a gamma count of between 200 and 1000 counts per second.

US 7,474,221 describes a method of permanently marking the location of a tubular joint, the method including creating a cavity into the end surface of one of the tubular ends that are to be joined by a forge weld or screw thread connection, inserting a marker into said cavity and subsequently joining the tubular ends.

CA 2,824,764 describes systems and methods for monitoring a position of a service tool in a wellbore.SUMMARY OF THE INVENTION

In accordance with the present invention, there are provided a method and system for detecting a downhole position in a wellbore, as per claims 1 and 8. According to one aspect of the invention there is provided a method for detecting a downhole position in a wellbore comprising: providing a set of signal emitters, each signal emitter in the set attached to a different position in the wellbore and each signal emitter configured to emit a signal having a unique characteristic; and providing a measurement tool comprising a signal detector configured to detect the different signals, and moving the measurement tool through the wellbore and determining one or more positions of the
signal emitters by the unique characteristic of each detected signal. The set of signal emitters can be selected from a group consisting of radioactive, inductive, magnetic, and radio frequency emitters. When the signal emitter is a radioactive signal emitter, the unique characteristic can be signal strength.

The position of each signal emitter can be a known distance to a specified destination in the wellbore, in which case the method further comprises providing a packer or a completion tool that is a fixed known distance from the measurement tool, and moving the measurement tool from the position of one of the signal emitters by the known distance of that signal emitter less the fixed known distance, thereby positioning the completion tool or packer at the specified destination. A packer can already be located at the specified destination in which case a completion tool engages the packer when the completion tool is positioned at the specified destination.

Multiple sets of the signal emitters can be provided in the wellbore. The signal emitters in each set are located along the wellbore in a unique sequence that is a permutation of the different radiographic signals provided by the signal emitters in the set. Each signal emitter in each set can be connected to a different casing joint in the wellbore. One of these signal emitters can be designated to be a target emitter that is at a known distance from a specified destination in the wellbore.

The measurement tool can further comprise a rotation detector for contacting an inner surface of the wellbore, in which case the method further comprises positioning the measurement tool beside the target emitter by detecting the target emitter using the signal detector, then moving the measurement tool towards the specified destination by a specified distance measured by the rotation detector rotating along the inner surface of the wellbore.

According to another aspect of the invention, there is provided a set of radioactive signal emitters for use in a method for detecting a downhole position in a wellbore. Each signal emitter in the set comprising: a tubular body connectable at each end to a joint of a wellbore casing; and a radioactive pip tag comprising a radioisotope material disposed around the circumference of the tubular body. The pip tag of each signal emitter emits a radioactive signal of different strength. The radioisotope material can be cobalt-60.

According to yet another aspect of the invention, there is provided a measurement tool for detecting a downhole position in a wellbore, comprising: a body mountable to a work string and movable through the wellbore; one or more signal detectors connected to the body and configured to detect a signal emitted from a signal emitter attached to the wellbore; a rotation detector comprising a ranging wheel rotationally connected to the body and contactable with an inner surface of the wellbore such that movement of the measurement tool along the wellbore rotates the ranging wheel; a counter configured to count rotations of the ranging wheel; and circuitry communicative with the signal detector and the rotation detector and communicable with a telemetry device to transmit thereto measurement data taken from the radioactive signal detector and rotation detector. The body can be tubular and the radiographic signal detector, rotation detector, and circuitry are connected to the body such that a continuous fluid conduit is provided through the body.

When two or more rotation detectors are provided, the circuitry comprises a processor and a memory having encoded thereon program code executable by the processor to read rotational measurement data from the at least two rotation detectors and select rotational measurement data meeting a selected reliability threshold for transmission to the telemetry device.

The rotation detector can comprise a magnet attached to the ranging wheel in which case the counter is a magnetic field sensor. The rotation sensor can comprise two counters, wherein each counter outputs a different output signal. Further, the rotation detector can comprise multiple magnets equidistantly disposed around the ranging wheel. The rotation detector can further comprise a pivot arm rotationally coupled to the ranging wheel at one end and pivotably coupled to the body and another end, and a spring coupled to the body and the arm to bias the ranging wheel away from the body. The body can comprise a cavity, and the rotation detector is movable between a retracted position wherein the ranging wheel is partially or fully within the cavity, and a deployed position wherein the ranging wheel protrudes from the body and is contactable with the inner surface of the wellbore.

### BRIEF DESCRIPTION OF THE DRAWINGS

In the accompanying drawings, which illustrate one or more exemplary embodiments:
Figure 1 (PRIOR ART) shows a schematic of an exemplary packer which interacts with a measurement tool of a range positioning system according to embodiments of the invention.
Figures 2(a) and (b) are schematic perspective and cross-sectional views of an embodiment of a signal emitter sub which forms part of the range positioning system, namely, a gamma pip tag sub.
Figure 3 is a schematic elevation view of production casing incorporating multiple gamma pip tag subs as shown in Figures 2(a) and (b), wherein each tag sub has pip tags of differing radioactive strength.
Figure 4 is a simplified version of the measurement tool comprising a gamma ray detector and a rotation detector.
Figure 5(a) is a schematic of components of the rotation detector, namely a ranging wheel and a pair of Hall Effect sensors. Figure 5(b) is a schematic graph of a first signal pattern outputted from the Hall Effect Sensors when the ranging wheel moves in a first direction, and Figure 5(b) is a schematic graph of a second signal pattern when the ranging wheel moves in an opposite second direction.
Figure 6 is a cross section view of the measurement tool incorporating 3 ranging wheels according to an alternative embodiment.

### DETAILED DESCRIPTION

Embodiments of the invention described herein relate to a range positioning system comprising one or more signal emitter subs and a measurement tool comprising a signal detector and a rotation detector. The measurement tool is communicative with a telemetry device for sending measurement data to surface in the form of telemetry signals such as mud pulses, electromagnetic carrier waves, or acoustic carrier waves. The signal emitter subs form part of a production wellbore. Each signal emitter sub is mounted at a location on the wellbore, such as at a joint between two adjacent production casings. The signal emitter sub can be a gamma pip tag sub comprising one or more gamma pip tags, in which case the signal detector is a gamma ray detector. Alternatively, the signal emitter sub can use a different type of emission source, such as inductive, magnetic and radio frequency, in which case the signal detector is configured to detect these different types of signal emissions.

In a first embodiment the measurement tool is attachable to a drill string having a completion tool at a known distance from the measurement tool, and the production wellbore includes a packer at a known distance from the signal emitter subs. When the drill string is lowered into the production casing, the gamma ray detector is used to detect each gamma pip tag sub passed by the measurement tool. By the detection of each gamma pip tag sub, an operator at surface will be able to determine the distance the measurement tool is from the packer within a resolution of one casing length. It thus follows that the operator will also be able to determine the distance of the completion tool from the packer within a resolution of one casing length. Once it has been determined that the completion tool is within one casing length of the packer, the operator relies on the rotation detector to provide higher resolution measurements of the location of the completion tool relative to the packer. The rotation detector includes a range wheel which engages the inside surface of the production casing; the measurement tool counts the number of rotations of the range wheel as a way to measure distance travelled by the completion tool relative to the production wellbore.

In a second embodiment, the measurement tool is attachable to a drill string having a packer or a completion tool that is to be delivered to a specified downhole location, wherein the distance between the measurement tool and the packer / completion tool is known. The specified downhole location is a known distance from the signal emitter subs. Therefore a similar technique can be deployed to determine the distance the measurement tool is from the specified downhole location using the signal detector and the rotation detector.

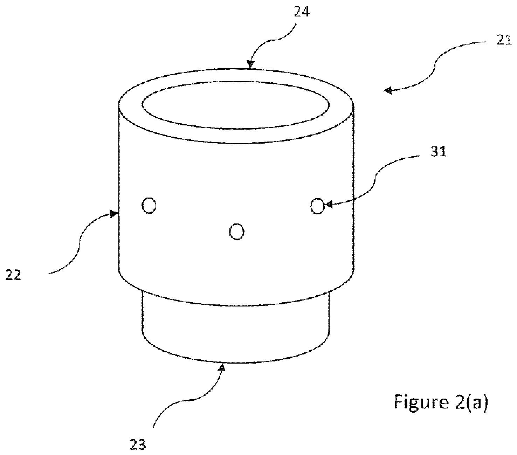

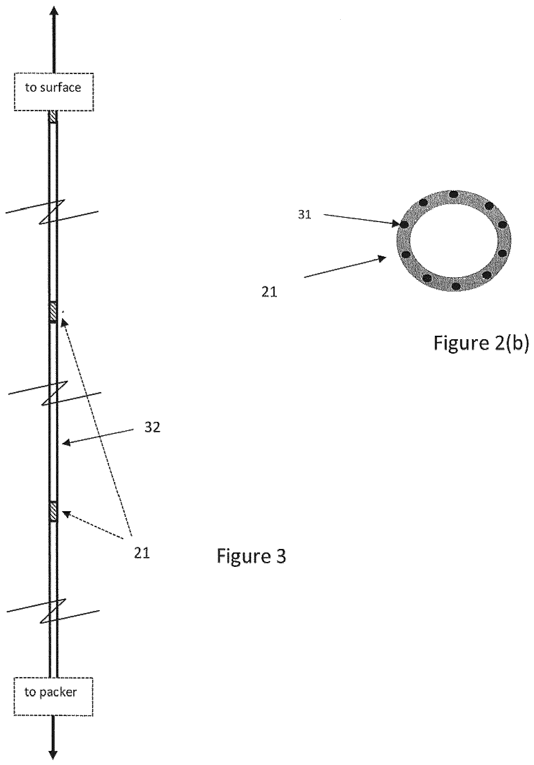

Referring to Figures 2 to 6 and according to one embodiment, a range positioning system comprises one or more signal emitter subs each in the form of a gamma pip tag sub 21 ("tag sub") and a measurement tool 46 comprising a rotation detector 40 and a signal detector 41 in the form of a gamma ray detector.

Each tag sub 21 comprises a threaded pipe section 22 having male and female threaded ends 23, 24 which correspond to and are connectable to respective female and male threaded ends of production casing 32 in the production wellbore. The outer surface of the pipe section 22 comprises one or more recesses each having embedded therein a gamma pip (31). A sufficient number of gamma pips 31 are provided around the tag sub 21 such that the gamma ray detector 41 should be able to detect a gamma ray emission regardless of the rotational position of the gamma ray detector 41 in the production wellbore. For example, in the embodiment shown in Figures 2(a) and 2(b), each tag sub 21 is provided with nine gamma pips 31 that are spaced evenly around the circumference of the tag sub 21 .

The gamma pip can be a small pip of radioisotope cobalt-60 emitting about 1 microCurie (µCi) (37,000 Bq). The emission should be strong enough to provide a detectable gamma count that is distinguishable over gamma emissions from the majority of natural rock surrounding the production wellbore; a suitable pip size of 1 µCi (37,000 Bq) should be sufficient to be detectable by a gamma sensor located inside the production wellbore under typical conditions, but the actual minimum pip strength will depend on the specific formation properties as well as other physical characteristics. Alternatively, other radioisotopes providing detectable emissions can be used, with a corresponding substitution in the gamma ray detector with a signal detector suitable to detect the other radioisotope.

When assembled, each gamma pip tag sub 21 connects adjoining production casings 32 in the production wellbore. The gamma pip tag subs 21 can be spaced evenly or at some other interval along the length of the production wellbore; in the first embodiment wherein the drill pipe string is delivering a completion tool to a packer, a tag sub 21 is mounted at every joint in a section of production casing 32 immediately above the packer ("illuminated section"). As will be discussed in detail below, there should be provided enough tag subs 21 to define a length of illuminated section of production wellbore that is greater than the distance between the completion tool and the measurement sub 46, in order to provide an operator sufficient space for the measurement sub to locate the illuminated section of the production wellbore before the completion tool 46 reaches the packer.

In the second embodiment wherein the drill pipe string is delivering a packer or completion tool to a specified downhole location, the illuminated section of production wellbore is located immediately above the specified downhole location.

Each tag sub 21 can comprise gamma pips having a unique characteristic, such as a unique radioactive strength. More particularly, a set of tag subs 21 can be provided wherein each tag sub 21 in the set has a different radioactive strength. For example, each tag sub 21 can have pip tags of one of three possible radioactive strengths, namely 1µCi, 2 µCi and 3 µCi (37,000 Bq, 74,000 Bq, and 111,000 Bq) (for simplicity, each tag sub 21 is herein referred to as having a radioactive strength of 1, 2 or 3) thereby forming a set of three tag subs 21 having six unique permutations: [1,2,3], [1,3,2], [2,1,3], [2,3,1], [3,1,2], [3,2,1]. As there are three gamma pip tag subs 21 in each set, there are eighteen uniquely identifiable positions along the illuminated section of the production wellbore. Assuming a repeating pattern of one gamma pip tag sub 21 per production casing 32, and assuming each production casing 32 is about forty feet long (about 12.19 metres long), the length of the illuminated section of the production wellbore is about 720 (about 219 metres) feet and the resolution is approximately 40 feet (about 12.19 metres).

In the first embodiment, the illuminated section of production wellbore is inserted just above the expected position of the packer. The gamma pip tag sub 21 closest to a height above the packer that corresponds to the distance between the completion tool and the measurement tool 46 is known as the target tag sub 21, and will have a unique identifier defined by the unique radiographic strength permutation that defines the identity of each unique set of tag subs 21, and the position of the target tag sub 21 within its set of tag subs 21. The operator will know the unique identifier of the target tag sub 21 and thus will be able to locate the completion tool within a casing length of the packer by locating the target tag sub 21 relative to the measurement sub 46 alone. A similar procedure is carried out in the second embodiment, wherein the operator will know the unique identifier of the target tag sub 21 and thus will be able to locate the packer / completion tool within a casing length of the specified downhole location.

Optionally, a sufficient number of tag subs 21 are provided that the length of the illuminated section of production wellbore exceeds the distance between the packer / completion tool and measurement sub 46 by at least one casing length, and preferably be several casing lengths. This provides at least one and preferably several tag subs 21 above the target tag sub 21 which can be identified by the measurement tool 46 as it is lowered into the production wellbore, and allows an operator to "count down" from the first located tag sub 21 to the target tag sub 21 (the operator will know the number of tag subs 21 between the first located tag sub 21 and the target tag sub 21) as a means for finding the location of the target tag sub 21 in the event that the measurement sub 46 was not able to detect the target tag sub 21.

Alternatively, more or fewer radioactive strengths can be used to expand or contract the gamma-illuminated section of production wellbore. For instance, a non-repeating unique pattern length of 3,840 feet (about 1,170 metres) of production casing is available with the use of sets of four strengths of gamma pip tags: [1, 2, 3, 4].

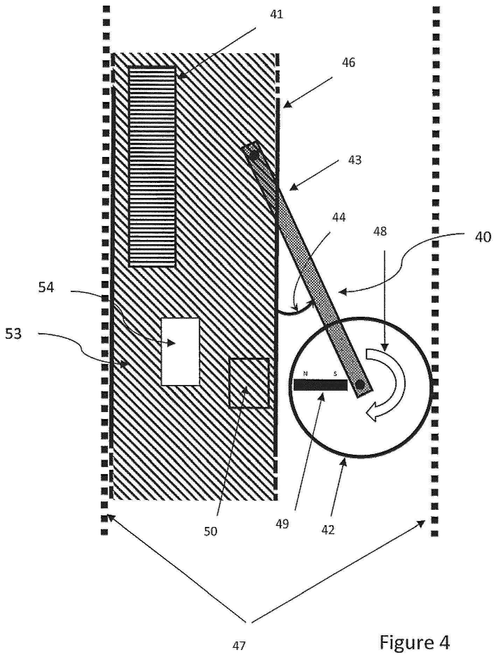

Referring now to Figure 4, the measurement tool 46 comprises a tubular body 53 that is connectable at both ends to drill pipe (not shown) or some other component of the work string, e.g. by providing male and female threaded ends that correspond to female and male threaded ends of the drill pipe. Components of the measurement tool 46 are mounted to the tubular body 53 such that a through bore is maintained inside the body 53 to allow drilling fluid to flow therethrough. In particular, the gamma ray detector 41 is mounted on the outside of the tubular body 53. The rotation detector 40 comprises a ranging wheel 42 mounted on a pivot arm 43 that in turn is pivotably coupled to the tubular body 53. A spring 44 coupled to the tubular body 53 and pivot arm 43 biases the ranging wheel 42 outwards such that the ranging wheel can make rolling contact with an inner wall 47 of the production wellbore. In this embodiment, the wheel 42 is situated adjacent to the gamma ray detector 41 such that the gamma ray detector 41 and rotation detector 40 are aligned; alternatively the gamma ray detector 41 and rotation detector 40 can be located on different parts of the tubular body 53 in which case a correction factor will need to be applied with correlating measurements made by each detector 40, 41 with the other.

The ranging wheel 42 contains a magnet 49 radially mounted on the wheel 42 such that rotation of the wheel 42 causes the magnet 49 to rotate. The rotation detector 40 also includes a magnetic field sensor such as a Hall Effect sensor 50 mounted on the tubular body 53 in sufficient proximity to the ranging wheel that the sensor 50 can detect each pass of the of the magnet 49. Instead of a Hall Effect sensor 50, another magnetic field sensor as is known in the art can be provided.

The measurement tool 46 also comprises electronic circuitry 54 mounted on the tubular body 53 in a protective housing (not shown); the circuitry is communicative with the Hall Effect sensor 50 and the gamma ray detector 41.

The circuitry 54 comprises a processor with a memory having encoded thereon program code executable by the processor to read measurement data from the Hall Effect sensor 50 and the gamma ray detector 41, record this data and transmit this data to a telemetry transmission device (not shown) for encoding the measurement data into a telemetry signal and for transmitting the telemetry signal to surface. In one embodiment, the circuitry is programmed to record and transmit measurement data as soon as the gamma ray detector 41 has detected a tag sub 21 or the Hall Effect sensor 50 has detected a rotation of the ranging wheel 42. No discrimination is made between whether the measurement tool 46 is moving downhole or uphole when the measurement was made.

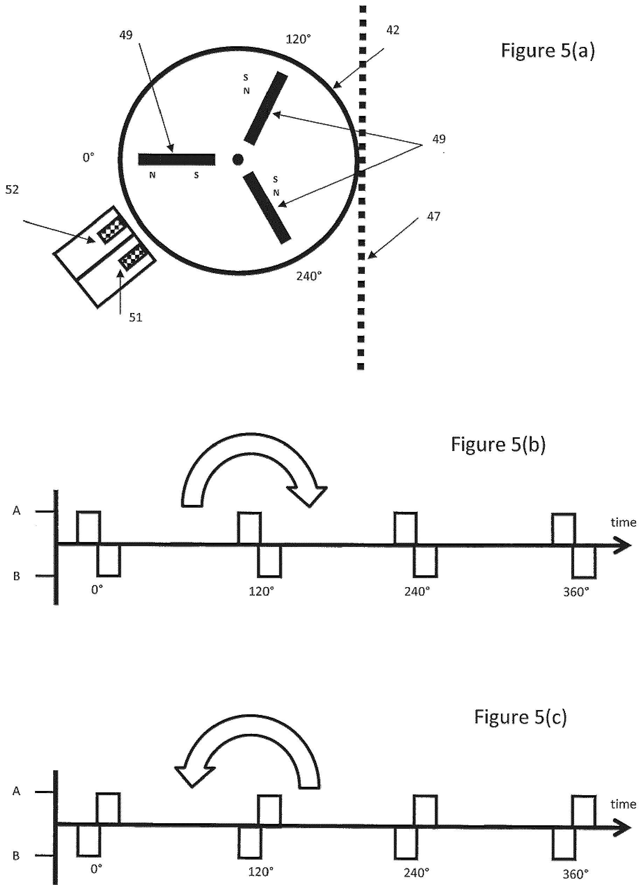

According to another embodiment and referring to Figures 5(a) to (c), the measurement tool 46 is provided with a pair of Hall Effect sensors 51, 52 that are arranged in adjacent to each other and in plane with the wheel such that each pass of magnets 49 in the ranging wheel 42 can be detected. One sensor 51 (positive sensor) is configured to output a positive signal when detecting a magnetic north pole caused by a passing magnet; a second sensor 52 (negative sensor) is configured to output a negative signal when detecting the magnetic north pole caused by a passing magnet. As shown in figure 5(b), when the measurement tool 46 moves uphole, the ranging wheel 46 will rotate clockwise and thus cause the positive sensor 51 to read each passing magnet then the negative sensor 52 to read the same magnet as it rotates pas both sensors 51, 52. This will produce a closely spaced or overlapping positive then a negative output in time; the circuitry is programmed to record a data point denoting an 'upward' count when this sequence is detected. As can be seen in Figure 5(c), the reverse happens for downhole movement of the measurement tool 46, and the circuitry in such instance is programmed to record a data point denoting a "downwards" count. The circuitry is further programmed with a counter that will increment and decrement based on the uphole and downhole movements of the ranging wheel 42.

Alternatively, other means for determining the sign of wheel rotation (quadrature encoding, binary encoding etc.) and other forms of magnet orientation (radial, transverse, circumferential; vector orientation N/S then S/N, etc.) can be implemented in the telemetry tool 46 in a manner as is known in the art.

As shown in Figure 5(a), the ranging wheel 42 is provided with three equidistantly spaced magnets 49; this provides greater detection resolution to the ranging wheel 42 compared to a wheel having a single sensor such as that shown in Figure 4. With three magnets 49, each having its north pole pointing radially out, the Hall Effect sensors 51, 52 record three counts per revolution. Thus, the distance measuring resolution of a 6 inch circumference wheel (1.91 inch diameter) (about 15 cm circumference, about 4.5 cm diameter) is
reduced to 2 inches. The number of revolutions for each unit of linear distance travelled can be calibrated, thus accounting for manufacturing tolerance and operational wear.

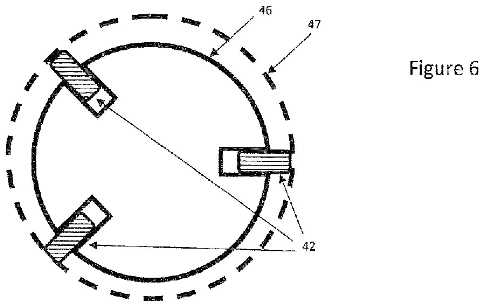

According to another embodiment and referring to Figure 6, there is provided a measurement tool 46 having a rotation detector with multiple ranging wheels 42 and corresponding Hall Effect sensor sets. The embodiment shown in Figure 6 features three such ranging wheels 42 and sensor sets (not shown), which provides redundancy in the event of failure or malfunction of one or two of the ranging wheels 42. The circuitry can be provided with a processor and a memory having encoded thereon program code executable by the processor and containing an error checking subroutine which compares the measurements taken by the sensor set for each ranging wheel 42 and determines whether the measurements are sufficient similar that a reliability threshold is met and the data is transmitted to the telemetry tool for transmission to surface. Alternatively the error checking subroutine can select the most consistent measurement data from one or two of the sensor sets and transmit this data to the telemetry tool.

The measurement data can be transmitted in raw form to the telemetry tool This information can be translated into up or down movement, then logged and/or telemetered to surface via conventional methods. This technique can be used to counteract the possibility that one wheel is damaged, or a particular section of the bore contains irregularities leading to false readings etc. Of course if two wheels are damaged or inoperable, data from the remaining wheel can be utilized.

The ranging wheels 42 can be completely external to the tubular body 52 as in the Figure 4, or be partially embedded in the tubular body 52 as shown in Figure 6. Alternatively, but not shown, the ranging wheels 42 can be retracted into cavities in the tubular body 52 such that the wheels 42 do not protrude beyond the outer diameter of the tubular body 52, until the wheels 42 are required for measurement, e.g. when the measurement tool 46 has located the target tag sub 21 and now needs to use the rotation detector to provide finer resolution position measurements. An actuator can be provided to deploy the ranging wheels 42 from their retracted positions into an engaged position wherein the wheels 42 are in rolling contact with the inner wall of the production wellbore.

In operation of the first embodiment, a drill string comprising the completion tool and the measurement tool 46 located a known distance from the completion tool is inserted into the production wellbore and conveys the measurement tool 46 down the well. The gamma ray detector 41 will sample low level gamma ray emissions from the formation background plus 'spikes' due to the gamma pip tags in each tag sub 21. Each measured sequence of three spikes should provide a unique permutation which should allow the surface operator to determine the downhole location of the measurement sub 46 within a resolution of one production casing length. Once the surface operator has identified one unique permutation of a set of tag subs, the operator should be able to determine the location of the target tag sub 21 relative to the identified set of tag subs 21, since the surface operator should have a profile of the gamma pip tag subs 21 which includes the unique permutation of each set of tag subs 21 and their sequence along the illuminated section of production wellbore. Alternatively, the surface operator can simply monitor each detected gamma ray reading from the gamma ray sensor 41 until the unique permutation of the target tag sub 21 has been detected.

Once the target tag sub 21 has been detected, the drill string is slowed, since this position indicates that the completion tool is within one production casing length from the packer. The surface operator then sets a rotation detector counter to zero and starts reading measurements taken by the rotation detector. Since the distance between the packer and target tag sub 21 is previously known, the operator continues moving the drill string until the rotation detector indicates that the measurement sub has moved a distance equal to the distance between the target tag sub 21 and the packer. Once this distance has been reached, downhole movement of the drill string is stopped, and the completion tool should have engaged the packer.

Once the completion tool has engaged the packer, actions can be taken to activate certain functions of the packer or completion tool. This can include flowing fluid under pressure through the drill string, as well as other actions. Flowing pressurized fluid through the drill string can change the length of the drill string enough to disengage the completion tool from the packer; during this process, the surface operator continues to monitor the positions measurements taken by the measurement sub (particularly the measurements from the rotation detector) to determine whether the completion tool has moved relative to the packer. If yes, then the surface operator can take corrective action to move the drill string by an amount which should return the completion tool back into an engaged position with the packer.

In typical operations requiring changes within a packer, the packer's initial position relative to the completion tool - normally at the distal end of the bottom hole assembly - is well established. Subsequent downhole operations can require that the completion tool be moved upwards or downwards by significant amount. The measurement tool 46 can also be used under these circumstances to determine whether the completion tool has actually moved the desired distance in the desired direction, and prompt the surface operator to take corrective action.

While the present invention is illustrated by description of several embodiments and while the illustrative embodiments are described in detail, it is not the intention of the applicants to restrict or in any way limit the scope of the appended claims to such detail. Instead, the scope of the invention is defined by the appended claims.

## Claims

1. A method for detecting a downhole position in a wellbore comprising:
(a) providing multiple sets of signal emitters (31), each signal emitter in the set attached to a different position in the wellbore and each signal emitter configured to emit a signal having a unique characteristic, wherein the signal emitters in each set are located along the wellbore in a unique sequence that is a permutation of the different signals provided by the signal emitters in the set; and
(b) providing a measurement tool (46) comprising a signal detector (41) configured to detect the different signals, and moving the measurement tool through the wellbore and determining one or more positions of the measurement tool in the wellbore by detecting one or more of the different signals and identifying the position of one or more of the signal emitters by the unique characteristic of each detected signal.

2. A method as claimed in claim 1 wherein the signal emitters are radioactive signal emitters, and wherein the unique characteristic is signal strength.

3. A method as claimed in claimed 2 wherein the position of each signal emitter is a known distance to a specified destination in the wellbore, and the method further comprises providing a packer or a completion tool that is a fixed known distance from the measurement tool, and moving the measurement tool from the position of one of the signal emitters by the known distance of that signal emitter less the fixed known distance, thereby positioning the completion tool or packer at the specified destination.

4. A method as claimed in claim 3 wherein the packer is located at the specified destination and the completion tool engages the packer when the completion tool is positioned at the specified destination.

5. A method as claimed in claim 1 wherein each signal emitter in the set is connected to a different casing joint in the wellbore, and one of the signal emitters is a target emitter that is at a known distance from a specified destination in the wellbore and
wherein the measurement tool further comprises a rotation detector (40) for contacting an inner surface of the wellbore and the method further comprises positioning the measurement tool beside the target emitter by detecting the target emitter using the signal detector, then moving the measurement tool towards the specified destination by a specified distance measured by the rotation detector rotating along the inner surface of the wellbore.

6. A method as claimed in any of claims 1-5, wherein the signal emitters are radioactive signal emitters, and wherein each signal emitter comprises a radioactive pip tag configured to emit a radioactive signal having a unique characteristic.

7. A method as claimed in any of claims 1-5, wherein the signal emitters are selected from a group consisting of inductive, magnetic, and radio frequency emitters.

8. A system comprising:
a plurality of sets of signal emitters (21) for use in detecting a downhole position in a wellbore; and
a wellbore casing comprising a plurality of joints,
wherein each signal emitter:
(a) is configured to emit a signal having a unique characteristic; and
(b) the signal emitters in each set are located along the wellbore casing in a unique sequence that is a permutation of the different signals provided by the signal emitters in the set.

9. A system as claimed in claim 8, wherein each signal emitter comprises a tubular body (22) connectable at each end to a joint of the plurality of joints, and comprises a radioactive pip tag comprising a radioisotope material disposed around the circumference of the tubular body.

10. A system as claimed in claim 9, wherein the radioisotope material is cobalt-60.

11. A system as claimed in any of claims 8-10, comprising:
(a) a body (53) mountable to a work string and movable through a wellbore;
(b) a signal detector (41) connected to the body and configured to detect signals emitted from the sets of signal emitters attached to the wellbore casing;
(c) a rotation detector (40) comprising a ranging wheel (42) rotationally connected to the body and contactable with an inner surface of the wellbore such that movement of the measurement tool along the wellbore rotates the ranging wheel; and a counter configured to count rotations of the ranging wheel; and
(d) circuitry communicative with the signal detector and the rotation detector and communicable with a telemetry device to transmit thereto measurement data taken from the signal detector and rotation detector.

12. A system as claimed in claim 11 wherein the body is tubular and the signal detector, rotation detector, and circuitry are connected to the body such that a fluid conduit is provided through the body.

13. A system as claimed in claim 12 further comprising at least two rotation detectors, and wherein the circuitry comprises a processor and a memory having encoded thereon program code executable by the processor to read rotational measurement data from the at least two rotation detectors and selecting rotational measurement data meeting a selected reliability threshold for transmission to the telemetry device.

14. A system as claimed in claim 11 wherein the rotation detector further comprises a pivot arm (43) rotationally coupled to the ranging wheel at one end and pivotably coupled to the body and another end, and a spring (44) coupled to the body and the arm to bias the ranging wheel away from the body.

15. A system as claimed in claim 11 wherein the body comprises a cavity, and the rotation detector is movable between a retracted position wherein the ranging wheel is partially or fully within the cavity, and deployed position wherein the ranging wheel protrudes from the body and is contactable with the inner surface of the wellbore.

## Patentansprüche

1. Verfahren zum Detektieren einer Bohrlochposition in einem Bohrloch, Folgendes umfassend:
(a) Bereitstellen mehrerer Sätze von Signalemittern (31), wobei jeder Signalemitter in dem Satz an einer anderen Position in dem Bohrloch angebracht und jeder Signalemitter dazu konfiguriert ist, ein Signal mit einer einzigartigen Eigenschaft zu emittieren, wobei sich die Signalemitter in jedem Satz entlang des Bohrlochs in einer einzigartigen Sequenz befinden, die eine Permutation der verschiedenen Signale ist, die durch die Signalemitter in dem Satz bereitgestellt werden; und
(b) Bereitstellen eines Messwerkzeugs (46), das einen Signaldetektor (41) umfasst, der dazu konfiguriert ist, die verschiedenen Signale zu detektieren, und Bewegen des Messwerkzeugs durch das Bohrloch und Bestimmen einer oder mehrerer Positionen des Messwerkzeugs in dem Bohrloch durch Detektieren eines oder mehrerer verschiedener Signale und Identifizieren der Position des einen oder der mehreren Signalemitter durch die einzigartige Eigenschaft jedes detektierten Signals.

2. Verfahren nach Anspruch 1, wobei die Signalemitter radioaktive Signalemitter sind und wobei die einzigartige Eigenschaft die Signalstärke ist.

3. Verfahren nach Anspruch 2, wobei die Position jedes Signalemitters ein bekannter Abstand zu einer spezifizierten Zielstelle in dem Bohrloch ist und das Verfahren ferner das Bereitstellen eines Packers oder eines Komplettierungswerkzeugs, das in einem bekannten Abstand zu dem Messwerkzeug fixiert ist, und das Bewegen des Messwerkzeugs von der Position eines der Signalemitter über den bekannten Abstand dieses Signalemitters abzüglich des bekannten fixierten Abstands und damit das Positionieren des Komplettierungswerkzeugs oder des Packers an der spezifizierten Zielstelle umfasst.

4. Verfahren nach Anspruch 3, wobei der Packer sich an der spezifizierten Zielstelle befindet und das Komplettierungswerkzeug den Packer in Eingriff nimmt, wenn das Komplettierungswerkzeug an der spezifizierten Zielstelle positioniert ist.

5. Verfahren nach Anspruch 1, wobei jeder Signalemitter in dem Satz mit einer anderen Gehäuseverbindung in dem Bohrloch verbunden ist und einer der Signalemitter ein Zielemitter ist, der sich in einem bekannten Abstand von einer spezifizierten Zielstelle in dem Bohrloch befindet, und
wobei das Messwerkzeug ferner einen Rotationsdetektor (40) zum Berühren einer inneren Fläche des Bohrlochs umfasst und das Verfahren ferner das Positionieren des Messwerkzeugs neben dem Zielemitter durch Detektieren des Zielemitters unter Verwendung des Signaldetektors und das darauffolgende Bewegen des Messwerkzeugs um einen spezifizierten Abstand, der durch den Rotationsdetektor, der entlang der inneren Fläche des Bohrlochs rotiert, gemessen wird, zu der spezifizierten Zielstelle hin umfasst.

6. Verfahren nach einem der Ansprüche 1-5, wobei die Signalemitter radioaktive Signalemitter sind, und wobei jeder Signalemitter eine radioaktive Zackenmarkierung umfasst, die dazu konfiguriert ist, ein radioaktives Signal mit einer einzigartigen Eigenschaft zu emittieren.

7. Verfahren nach einem der Ansprüche 1-5, wobei die Signalemitter aus einer Gruppe ausgewählt sind, die aus induktiven, magnetischen und Funkfrequenzemittern besteht.

8. System, Folgendes umfassend:
eine Vielzahl von Sätzen von Signalemittern (21) zur Verwendung beim Detektieren einer Bohrlochposition in einem Bohrloch; und
ein Bohrlochgehäuse, das eine Vielzahl von Verbindungen umfasst,
wobei jeder Signalemitter:
(a) dazu konfiguriert ist, ein Signal mit einer einzigartigen Eigenschaft zu emittieren; und
(b) sich die Signalemitter in jedem Satz entlang des Bohrlochgehäuses in einer einzigartigen Sequenz befinden, die eine Permutation der verschiedenen Signale ist, die durch die Signalemitter in dem Satz bereitgestellt werden.

9. System nach Anspruch 8, wobei jeder Signalemitter einen röhrenförmigen Körper (22) umfasst, der an jedem Ende mit einer Verbindung der Vielzahl von Verbindungen verbunden werden kann, und eine radioaktive Zackenmarkierung umfasst, die ein radioisotopisches Material umfasst, das um den Umfang des röhrenförmigen Körpers angeordnet ist.

10. System nach Anspruch 9, wobei das radioisotopische Material Kobalt 60 ist.

11. System nach einem der Ansprüche 8-10, Folgendes umfassend:
(a) einen Körper (53), der an einen Arbeitsstrang montierbar und durch ein Bohrloch beweglich ist;
(b) einen Signaldetektor (41), der mit dem Körper verbunden und dazu konfiguriert ist, Signale zu detektieren, die von den Sätzen von Signalemittern emittiert werden, die an dem Bohrlochgehäuse angebracht sind;
(c) einen Rotationsdetektor (40), der ein Bereichsrad (42), das rotierbar mit dem Körper verbunden ist und eine innere Fläche des Bohrlochs derart berühren kann, dass Bewegung des Messwerkzeugs entlang des Bohrlochs das Bereichsrad rotiert, und einen Zähler umfasst, der dazu konfiguriert ist, die Rotationen des Bereichsrads zu zählen; und
(d) eine Schaltung, die mit dem Signaldetektor und dem Rotationsdetektor kommuniziert und mit einer Telemetrievorrichtung kommunizieren kann, um Messdaten, die von dem Signaldetektor und dem Rotationsdetektor stammen, dorthin zu übertragen.

12. System nach Anspruch 11, wobei der Körper röhrenförmig ist und der Signaldetektor, der Rotationsdetektor und die Schaltung derart mit dem Körper verbunden sind, dass eine Fluidleitung durch den Körper bereitgestellt ist.

13. System nach Anspruch 12, ferner mindestens zwei Rotationsdetektoren, wobei die Schaltung einen Prozessor und einen Speicher mit einem darauf codierten Programmcode umfasst, der durch den Prozessor ausführbar ist, um Rotationsmessdaten von den mindestens zwei Rotationsdetektoren auszulesen, und das Auswählen von Rotationsmessdaten umfassend, die zu einem ausgewählten Zuverlässigkeitsschwellenwert zur Übertragung an die Telemetrievorrichtung passen.

14. System nach Anspruch 11, wobei der Rotationsdetektor ferner einen Schwenkarm (43), der an einem Ende rotierbar an das Bereichsrad gekoppelt ist und an einem anderen Ende schwenkbar mit dem Körper gekoppelt ist, und eine Feder (44) umfasst,
die mit dem Körper und dem Arm gekoppelt ist, um das Bereichsrad von dem Körper weg vorzuspannen.

15. System nach Anspruch 11, wobei der Körper einen Hohlraum umfasst und der Rotationsdetektor zwischen einer eingezogenen Position, wobei sich das Bereichsrad teilweise oder vollständig innerhalb des Hohlraums befindet, und einer ausgefahrenen Position beweglich ist, wobei das Bereichsrad von dem Körper vorsteht und die innere Fläche des Bohrlochs berühren kann.

## Revendications

1. Procédé permettant la détection d'une position de fond de puits dans un puits de forage comprenant :
(a) la fourniture de multiples ensembles d'émetteurs de signaux (31), chaque émetteur de signaux dans l'ensemble étant fixé au niveau d'une position différente dans le puits de forage et chaque émetteur de signaux conçu pour émettre un signal possédant une caractéristique unique, lesdits émetteurs de signaux dans chaque ensemble étant situés le long du puits de forage selon une séquence unique qui est une permutation des différents signaux fournis par les émetteurs de signaux dans l'ensemble ; et
(b) la fourniture d'un outil de mesure (46) comprenant un détecteur de signaux (41) conçu pour détecter les différents signaux et le déplacement de l'outil de mesure à travers le puits de forage et la détermination d'une ou de plusieurs positions de l'outil de mesure dans le puits de forage en détectant un ou plusieurs signaux parmi les différents signaux et en identifiant la position d'un ou de plusieurs émetteurs de signaux parmi les émetteurs de signaux par la caractéristique unique de chaque signal détecté.

2. Procédé selon la revendication 1, lesdits émetteurs de signaux étant des émetteurs de signaux radioactifs et ladite caractéristique unique étant une intensité de signal.

3. Procédé selon la revendication 2, ladite position de chaque émetteur de signaux étant une distance connue jusqu'à une destination spécifiée dans le puits de forage et ledit procédé comprenant en outre la fourniture d'une garniture d'étanchéité ou d'un outil de complétion qui est à une distance connue fixe de l'outil de mesure, et le déplacement de l'outil de mesure depuis la position de l'un des émetteurs de signaux de la distance connue de cet émetteur de signaux moins la distance connue fixe, positionnant ainsi l'outil de complétion ou la garniture d'étanchéité au niveau de la destination spécifiée.

4. Procédé selon la revendication 3, ladite garniture d'étanchéité étant située au niveau de la destination spécifiée et ledit outil de complétion se mettant en prise avec la garniture d'étanchéité lorsque l'outil de complétion est positionné au niveau de la destination spécifiée.

5. Procédé selon la revendication 1, chaque émetteur de signaux dans l'ensemble étant raccordé à un joint de tubage différent dans le puits de forage et l'un des émetteurs de signaux étant un émetteur cible est à une distance connue de la destination spécifiée dans le puits de forage et ledit outil de mesure comprenant en outre un détecteur de rotation (40) destiné à entrer en contact avec une surface interne du puits de forage et ledit procédé comprenant en outre le positionnement de l'outil de mesure à côté de l'émetteur cible en détectant l'émetteur cible à l'aide du détecteur de signaux, puis le déplacement de l'outil de mesure vers le destination spécifiée d'une distance spécifiée mesurée par le détecteur de rotation tournant le long de la surface interne du puits de forage.

6. Procédé selon l'une quelconque des revendications 1 à 5, lesdits émetteurs de signaux étant des émetteurs de signaux radioactifs et chaque émetteur de signaux comprenant une étiquette de marquage radioactive conçue pour émettre un signal radioactif possédant une caractéristique unique.

7. Procédé selon l'une quelconque des revendications 1 à 5, lesdits émetteurs de signaux étant choisis dans un groupe constitué d'émetteurs inductifs, magnétiques et radiofréquences.

8. Système comprenant :
une pluralité d'ensembles d'émetteurs de signaux (21) destinés à être utilisés pour détecter une position de fond de puits dans un puits de forage ; et
un tubage de puits de forage comprenant une pluralité de joints,
chaque émetteur de signaux :
(a) étant conçu pour émettre un signal possédant une caractéristique unique ; et
(b) lesdits émetteurs de signaux dans chaque ensemble étant situés le long du tubage du puits de forage selon une séquence unique qui est une permutation des différents signaux fournis par les émetteurs de signaux dans l'ensemble.

9. Système selon la revendication 8, chaque émetteur de signaux comprenant un corps tubulaire (22) pouvant être raccordé au niveau de chaque extrémité à un joint de la pluralité de joints et comprenant une étiquette de marquage radioactive comprenant un matériau radio-isotopique disposé autour de la circonférence du corps tubulaire.

10. Système selon la revendication 9, ledit matériau radio-isotopique étant du cobalt-60.

11. Système selon l'une quelconque des revendications 8 à 10, comprenant :
(a) un corps (53) pouvant être monté à une colonne de travail et pouvant être déplacé à travers un puits de forage ;
(b) un détecteur de signaux (41) raccordé au corps et conçu pour détecter des signaux émis par les ensembles d'émetteurs de signaux fixés au tubage de puits de forage ;
(c) un détecteur de rotation (40) comprenant une roue télémétrique (42) reliée de manière rotative au corps et pouvant être mise en contact avec une surface interne du puits de forage de sorte que le déplacement de l'outil de mesure le long du puits de forage entraîne la rotation de la roue télémétrique ; et un compteur conçu pour compter les rotations de la roue télémétrique ; et
(d) un ensemble de circuits communiquant avec le détecteur de signaux et le détecteur de rotation et pouvant communiquer avec un dispositif télémétrique afin de lui transmettre des données de mesure prises à partir du détecteur de signaux et du détecteur de rotation.

12. Système selon la revendication 11, ledit corps étant tubulaire et ledit détecteur de signaux, ledit détecteur de rotation et ledit ensemble de circuits étant raccordés au corps de sorte qu'un conduit de fluide soit disposé à travers le corps.

13. Système selon la revendication 12, comprenant en outre au moins deux détecteurs de rotation et ledit ensemble de circuits comprenant un processeur et une mémoire sur laquelle est codé un code de programme pouvant être exécuté par le processeur pour lire des données de mesure de rotation à partir des au moins deux détecteurs de rotation et sélectionnant des données de mesure de rotation satisfaisant un seuil de fiabilité choisi en vue de la transmission au dispositif télémétrique.

14. Système selon la revendication 11, ledit détecteur de rotation comprenant en outre un bras pivotant (43) couplé en rotation à la roue télémétrique au niveau d'une extrémité et couplé pivotante au corps et à une autre extrémité, et un ressort (44)
couplé au corps et au bras pour éloigner la roue télémétrique du corps.

15. Système selon la revendication 11, ledit corps comprenant une cavité et ledit détecteur de rotation pouvant être déplacé entre une position rétractée dans laquelle la roue télémétrique est partiellement ou totalement à l'intérieur de la cavité et une position déployée dans laquelle la roue télémétrique fait saillie du corps et peut être mise en contact. avec la surface interne du puits de forage.
